(19) Europäisches Patentamt

European Patent Office

Office européen des brevets

(11) Veröffentlichungsnummer: **0 288 917 B1**

(12) **EUROPÄISCHE PATENTSCHRIFT**

(45) Veröffentlichungstag der Patentschrift: **09.09.92**

(51) Int. Cl.⁵: **C02F 3/32**

(21) Anmeldenummer: **88106457.0**

(22) Anmeldetag: **22.04.88**

(54) **Verwendung von Grünalgen oder Grünalgenextrakt zur biologischen Desulfonierung von sulfonierten organischen Verbindungen in Abwässern.**

(30) Priorität: **25.04.87 DE 3713882**

(43) Veröffentlichungstag der Anmeldung:
**02.11.88 Patentblatt 88/44**

(45) Bekanntmachung des Hinweises auf die Patenterteilung:
**09.09.92 Patentblatt 92/37**

(84) Benannte Vertragsstaaten:
**CH DE FR LI**

(56) Entgegenhaltungen:
**WO-A-86/03480**
**DE-A- 2 259 788**
**DE-A- 2 334 279**
**US-A- 2 867 945**

**CHEMICAL ABSTRACTS, Band 72, Nr. 12, 23. März 1970, Seite 270, Zusammenfassung Nr. 58847j, Columbus, Ohio, US; J. WURTZ-ARLET: "Disappearance of detergents in algae cultures".**

(73) Patentinhaber: **Forschungszentrum Jülich GmbH**
**Postfach 1913**
**W-5170 Jülich(DE)**

(72) Erfinder: **Luther, Markus**
**Kopernikusstrasse 20**
**W-5170 Jülich(DE)**
Erfinder: **Soeder, Carl-Johannes, Prof.**
**Diemelstrasse 5**
**W-4600 Dortmund 41(DE)**

## Beschreibung

Gegenstand der Erfindung ist die Verwendung von Grünalgen der Gattung Scenedesmus obliquus, Chlorella vulgaris oder Euglena gracilis oder von durch mechanischen Zellaufschluß und Zellwandabtrennung gewonnenem Zellextrakt solcher Grünalgen zur biologischen Desulfonierung aromatischer Sulfonsäuren und Sulfonate in Prozeßabwässern.

Substituierte aromatische Verbindungen sind allgemein als schwer abbaubare Xenobiotika bekannt. Speziell sulfonierte Aromaten, die als Netzmittel in der Textilverarbeitung oder als Farbstoffkopplungskomponenten angewandt werden, gelten als relativ persistente Xenobiotika und werden in Kläranlagen kaum abgebaut. Sie sollen so bis zu 10 % der organischen Fracht im Rhein ausmachen.

Es wurden daher bereits Versuche angestellt, substituierte Aromaten biologisch abzubauen. So wurden Pseudomanaden isoliert, die Naphthalin-1-sulfonsäure und Naphthalin-2-sulfonsäure als Kohlenstoffquelle nutzen können, allerdings nur unter kontrollierten Bedingungen, d.h. als einzige C-Quelle (Birlon et al, Appl. Environ. Microbiol. 42 (1981) S. 44 - 55). Ferner wurde festgestellt, daß Pseudomonaden in der Lage sind, 18 verschiedene Naphthalinsulfonsäuren als einzige Schwefelquelle zu nutzen, wobei Hydroxynaphthaline entstehen. Dabei darf jedoch Sulfat nicht gleichzeitig anwesend sein.

Es wurde nun gefunden, daß der biologische Abbau von sulfonierten organischen Verbindungen, insbesondere von aromatischen Sulfonsäuren oder Sulfonaten, in Flüssigkeiten von unterschiedlicher Zusammensetzung, die weitere C-Verbindungen und insbesondere auch Sulfate enthalten können, mit Hilfe der Grünalgen, wie eingangs angegeben, möglich ist.

Zwar sind aus Chemical Abstracts, Band 72, Nr. 12, 23 März 1970, Seite 270, Zusammenfassung Nr. 58847j Untersuchungen über den Abbau von Sulfonat-Detergentien mit filamentögen Grünalgen wie Stigeoclonium, Cladophora und Spirogyra innerhalb von 7 bis 34 Tagen bekannt, jedoch erscheinen diese Abbauleistungen für eine gewerbliche Anwendung wenig ermutigend.

Bei dem erfindungsgemäßen Abbau mit Grünalgen bzw. aus solchen Grünalgen gewonnenem Zellextrakt kann die Desulfonierung sowohl in Anwesenheit von Sulfat als auch weiterer C-haltiger Verbindungen stattfinden, die im Abwasser vorhanden sein können. Als Abbauprodukte werden Hydroxyverbindungen gebildet, die von Bakterien in einer Nachklärstufe abgebaut werden können.

Besonders geeignet sind für dieses Verfahren Extrakte bzw. Algen aus der Gattung der Grünalgen Scenedesmus obliquus, Chlorella vulgaris und Euglena gracilis.

Vorzugsweise liegt die Biomassekonzentration bei der Behandlung mit Grünalgen im Bereich von 20 - 100 g/l. Die Behandlungsdauer sollte zweckmäßigerweise zumindest 1 Std. betragen. Nach der Behandlung werden die Grünalgen zweckmäßigerweise abgetrennt und einer Wiederbelebungsphase zugeführt, nach der eine erneute Verwendung für weitere Wasserchargen erfolgt.

Der für den erfindungsgemäßen Sulfonatabbau nützliche Grünalgenextrakt wird durch mechanischphysikalischen Zellaufschluß erhalten und kann insbesondere in lyophilisierter Form vorliegen.

Der pH-Wert der Desulfonierungsbehandlung ist nicht kritisch und kann im etwa Neutralen bis leicht Sauren liegen, wobei pH-Werte von 5,5 bis 7,5 optimal sind.

Der erfindungsgemäße Abbau erfolgt entweder

1. mit Grünalgenzellen; oder

2. mit aus Grünalgen gewonnenem Zellextrakt unter entsprechend unterschiedlichen Bedingungen.

### 1. Abbau mit Grünalgen:

Grünalgen (Scenedesmus obliquus) werden in anorganischem Medium (N8 oder NS1, Soeder et al. Arch. Hydrobiol. Suppl. 33 (1967) 127 - 171) und Licht (500 - 1100 $\mu E . m^{-2} . s^{-1}$) unter axenischen oder nichtaxenischen Batchbedingungen oder in kontinuierlicher Massenkultur angezogen (Richmond, "CRC Handbook of Microalgal Mass Culture" CRC-Press 1986) und sodann durch Zentrifugieren oder Filtration gesammelt bzw. "aufkonzentriert". Danach werden die Algen mit den die sulfonierten Aromaten enthaltenden Abwässern auf eine Biomassekonzentration von 20 - 100 g/l verdünnt. Der pH-Wert sollte bevorzugt zwischen pH 6,0 und pH 7,0 eingestellt sein, da die Algen in diesem Bereich ein Wachstumsoptimum besitzen. Die Inkubationstemperatur sollte zwischen 25 - 35°C liegen (Hegewald, Arch. Hydrobiol. Algological Studies 37 (1984), 441 - 46).

Die Inkubationszeit sollte vorzugsweise mindestens eine Stunde betragen, wobei sich die zweckmäßige Inkubationszeit nach der Konzentration der Sulfonate richtet.

Nach der Desulfonierung werden die Algen mittels Zentrifugieren, Filtration, Ausfällung mit Calciumhydroxid bei pH 9,0 oder durch Absetzenlassen von den Abwässern getrennt.

Die Algen können nach 24stündiger Inkubation in anorganischem Medium und Licht (700 - 2500 $\mu E . m^{-2} . s^{-1}$) wiederverwendet werden.

### 2. Abbau mit Grünalgenextrakt:

Grünalgen werden in anorganischem Medium unter Licht wie bei (1) angezogen und gesammelt. Die Gewinnung des Zellextraktes erfolgt durch Zellaufschluß mittels Zell- bzw. Kugelmühle oder French Press mit nachfolgender Zellwandabtrennung durch Zentrifugieren. Zweckmäßigerweise wird dieser Zellextrakt unmittelbar anschließend an seine Gewinnung verwendet.

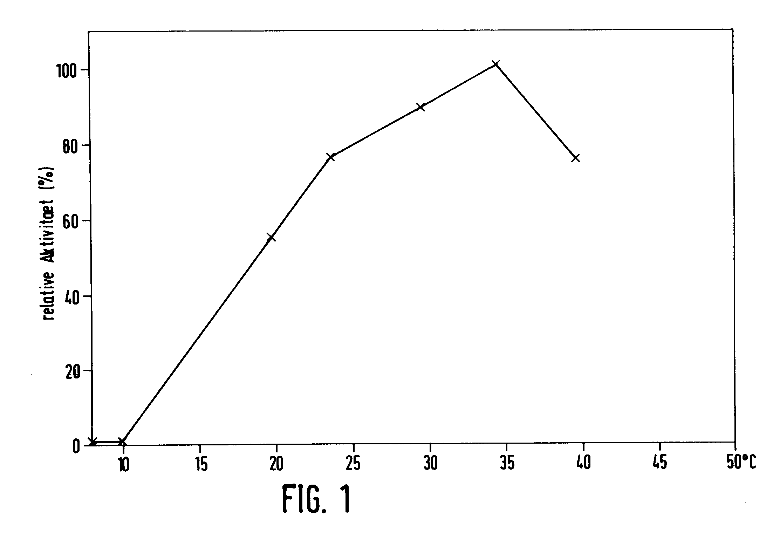

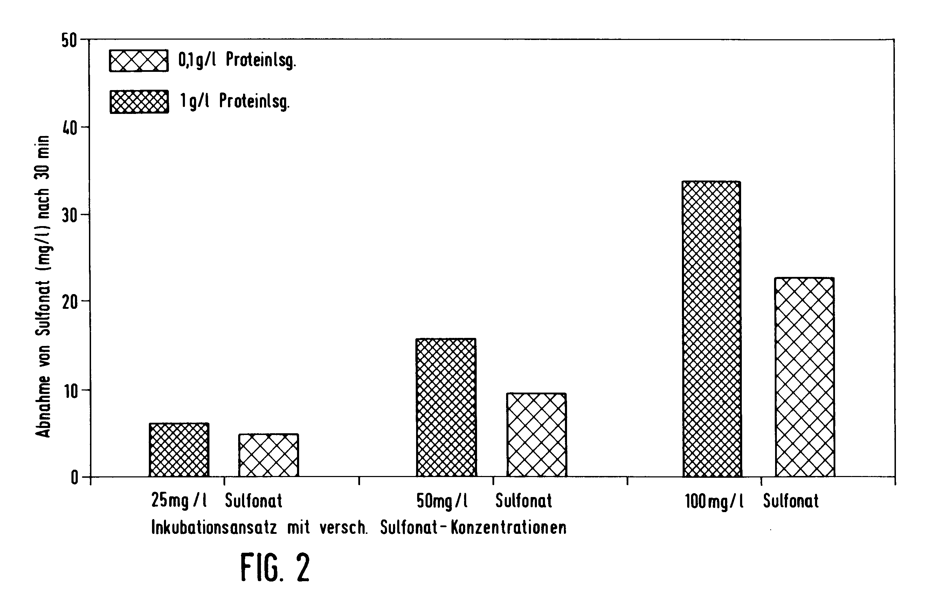

Der Zellextrakt wird den die sulfonierten Aromaten enthaltenden Abwässern zugegeben, wobei der vom Algenextrakt stammende Proteingehalt des Gemisches mindestens gleich 0,1 g/l und der pH-Wert neutral sein soll. Die Temperatur sollte zweckmäßigerweise zwischen 25 - 30°C liegen (siehe Fig. 1). Der angemessene Proteingehalt richtet sich dabei nach der Konzentration an sulfonierten Aromaten in der Flüssigkeit (siehe Fig. 2).

Die Inkubationszeit hängt vom Sulfonatgehalt der zu behandelnden Flüssigkeit ab. Sie soll mehr als 10 min betragen, insbesondere etwa 30 - 90 min.

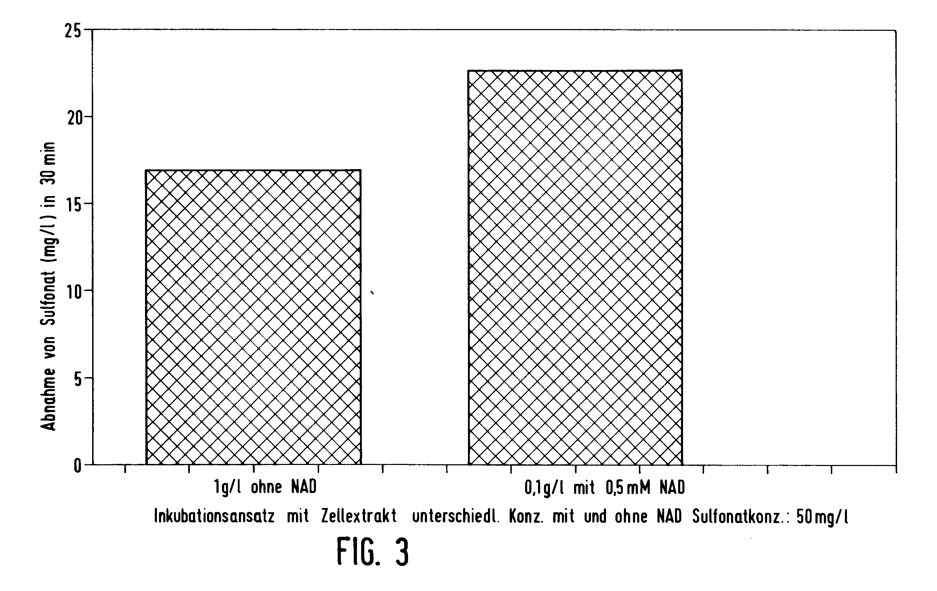

Um die Reaktion zu beschleunigen, kann als Kofaktor zu der Proteinlösung noch $NAD^+$ - (Nicotinamid-adenin-dinucleotid) in einer Konzentration bis zu 1 mM (= 663 mg/l) zugesetzt werden (siehe Fig. 3).

Das nach der Behandlung mit Algenextrakt vorliegende Gemisch kann man einer Kläranlage zuführen. Alternativ können die Proteine durch Erhitzen denaturiert und ausgefällt werden.

Vorteil der Inkubation mit Zellextrakt ist, daß dieser effizienter und schneller desulfonieren kann als ganze Algenzellen, wobei mit geringeren Proteingehalten gearbeitet werden kann.

## Patentansprüche

1. Verwendung von Grünalgen der Gattung Scenedesmus obliquus, Chlorella vulgaris oder Euglena gracilis oder von durch mechanischen Zellaufschluß und Zellwandabtrennung gewonnenem Zellextrakt solcher Grünalgen zur biologischen Desulfonierung aromatischer Sulfonsäuren und Sulfonate in Prozeßabwässern.

2. Verwendung nach Anspruch 1,
   **dadurch gekennzeichnet,**
   daß man die Abwässer zumindest 1 Std. lang mit den Grünalgen behandelt.

3. Verwendung nach Anspruch 1,
   **dadurch gekennzeichnet,**
   daß man die Abwässer mehr als 10 min, insbesondere 30 bis 90 min, mit dem Zellextrakt behandelt.

4. Verwendung nach Anspruch 1 oder 2,
   **dadurch gekennzeichnet,**
   daß man bei der Behandlung mit Grünalgen mit Biomassekonzentrationen von 20 bis 100 g/l arbeitet.

5. Verwendung nach Anspruch 1, 2 oder 4,
   **dadurch gekennzeichnet,**
   daß man die Grünalgen anschließend abtrennt und nach einer Wiederbelebungsphase erneut für weitere Wasserchargen verwendet.

6. Verwendung nach Anspruch 1 oder 3,
   **dadurch gekennzeichnet,**
   daß die zellextrakthaltige Flüssigkeit nach der Behandlung einer Klärstufe zugeführt wird.

7. Verwendung nach einem der vorangehenden Ansprüche,
   **dadurch gekennzeichnet,**
   daß man Algen oder Algenextrakt der Grünalge Scenedesmus obliquus, Chlorella vulgaris oder Euglena gracilis verwendet.

## Claims

1. Use of green algae of the category Scenedesmus obliquus, Chlorella vulgaris or Euglena gracilis, or of cell extract of such green algae which is obtained by mechanical cell disintegration and cell wall separation, for the biological desulphonation of aromatic sulphonic acids and sulphonates in process waste waters.

2. Use according to claim 1, characterised in that the waste waters are treated for at least 1 hour with the green algae.

3. Use according to claim 1, characterised in that the waste waters are treated with the cell extract for more than 10 min., especially 30 to 90 min.

4. Use according to claim 1 or 2, characterised in that, when carrying out treatment with green algae, biomass concentrations of 20 to 100 g/l are used.

5. Use according to claim 1, 2 or 4, characterised in that the green algae are subsequently separated off and re-used for further batches of water after a reactivation phase.

6. Use according to claim 1 or 3, characterised in that the cell-extract-containing liquid is fed to a clarification stage after the treatment.

7. Use according to one of the preceding claims, characterised in that algae or algae extract of the green alga Scenedesmus obliquus, Chlorella vulgaris or Euglena gracilis are used.

**Revendications**

1. Utilisation d'algues vertes de la famille Scenedesmus obliquus, Chlorella vulgaris ou Euglena gracilis, ou d'un extrait cellulaire de telles algues vertes, obtenu par désintégration cellulaire mécanique et séparation de la paroi cellulaire, pour la désulfuration biologique d'acides sulfoniques aromatiques et de sulfonates dans des eaux résiduaires industrielles.

2. Utilisation selon la revendication 1, caractérisée en ce qu'on traite les eaux résiduaires pendant au moins 1 heure avec les algues vertes.

3. Utilisation selon la revendication 1, caractérisée en ce qu'on traite les eaux résiduaires pendant plus de 10 minutes, en particulier pendant 30 à 90 minutes, avec l'extrait cellulaire.

4. Utilisation selon la revendication 1 ou 2, caractérisée en ce qu'on travaille, pendant le traitement aux algues vertes, à une concentration de biomasse de 20 à 100 g/l.

5. Utilisation selon la revendication 1, 2 ou 4, caractérisée en ce qu'on sépare ensuite les algues vertes et on les utilise de nouveau pour d'autres charges d'eau après une phase de régénération.

6. Utilisation selon la revendication 1 ou 3, caractérisée en ce qu'on soumet le liquide contenant l'extrait cellulaire à une étape de clarification après le traitement.

7. Utilisation selon l'une des revendications précédentes, caractérisée en ce qu'on utilise des algues ou un extrait d'algues provenant de l'algue verte Scenedesmus obliquus, Chlorella vulgaris ou Euglena gracilis.

FIG. 1

EP 0 288 917 B1

FIG. 2

FIG. 3

Abnahme von Sulfonat (mg/l) in 30 min

Inkubationsansatz mit Zellextrakt unterschiedl. Konz. mit und ohne NAD Sulfonatkonz.: 50 mg/l

1g/l ohne NAD

0,1g/l mit 0,5 mM NAD